# EUROPEAN PATENT SPECIFICATION

(11) **EP 1 202 521 B1**
(45) Date of publication and mention of the grant of the patent: **29.06.2005**
(21) Application number: 00410132.5
(22) Date of filing: 31.10.2000
(51) Int. Cl.: H04L 29/06, H04M 7/00

(54) **A method for processing in a gatekeeper of an internet protocol network**
Verfahren zur Nachrichtenverarbeitung in einem Gatekeeper eines IP-netzes
Procédé de traitement des messages dans un Gatekeeper d'un réseau IP

(43) Date of publication of application: 02.05.2002
(73) Proprietor: Hewlett-Packard Company, A Delaware Corporation, Palo Alto, CA 94304 (US)
(72) Inventor: Bouat, Sébastien, 38920 Crolles (FR)
(74) Representative: Lloyd, Richard Graham

(56) References cited:
- WO-A-00/48368
- US-A- 5 271 003

## Description

The invention deals with Internet Protocol networks (IP networks), and particularly with voice conferencing over such networks.

An international standard called H323 has been developped for conferencing over IP networks, which aims at allowing not only different Internet telephony products to inter-operate, but also to allow interoperability between ISDN (Integrated Service Digital Network) and telephony based conferencing systems.

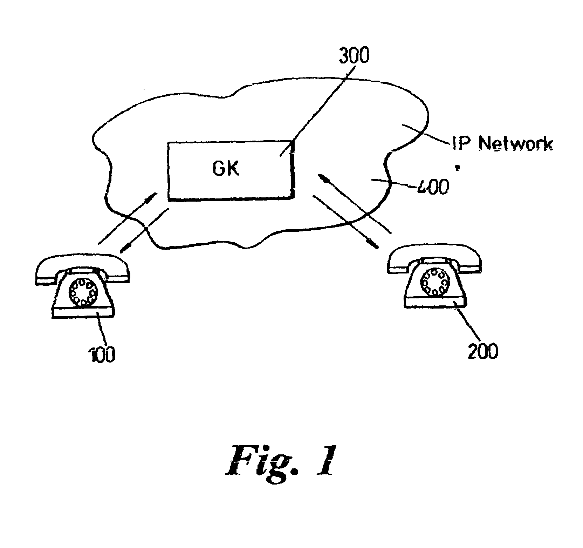

An elementary H323 configuration of a network comprises, as illustrated on figure 1, two end-points 100 and 200, such as two IP phones, and a gatekeeper 300. Gatekeeper 300 is usually a part of the Internet-protocol network, referenced 400 on the figure.

The gatekeeper 300 is the network infrastrusture component which allows the two end-points 100 and 200 to establish a call.

In a routed mode, when an end-point 100 requires the establishment of the call, it sends a first admission request to the gatekeeper 300. This request includes for instance a conference identifier that identifies uniquely the call, and identifiers of the caller and the callee.

The gatekeeper 300 checks that the call can be established between the caller 100 and the callee 200 (for example that the caller 100 still owns prepaid communication time rights, or that the callee is available at the moment). This checking is carried out on the basis of data contained in the message and on the basis of background data contained in the gatekeeper.

If gatekeeper 300 authorises the call, it sends an admission confirmation message to the source end point 100 that has made the request.

In order to set-up a call, a series of messages are sent between the caller and the gatekeeper, and between the gatekeeper and the callee. Both caller 100 and callee 200 send admission requests (set messages) to the gatekeeper 300, admission requests which contain the identifiers of the caller 100 and the callee. In response to each admission request, the gatekeeper sends an admission confirm.

A further example of a gatekeeper system is described in WO 00/48368, which describes an arrangement for distributing and dispatching traffic in a system having one or more gatekeepers.

Admission messages belong to a message protocal called "Registration, Admission and Status" (RAS). Two other types of RAS messages involved in calls are RAS bandwidth requests and disengage requests.

RAS bandwidth requests appear when two end-points which are already in communication request a bandwidth changing, for example when a very voluminous file is to be exchanged between them.

Disengage messages are exchanged when call completes.

Messages hold a set of information elements. These information elements allow to know who is the source, the destination endpoint and so on.

One special information element is the conference identifier that identifies uniquely the call and is the same for all the messages that belong to a call.

It is a globally unique identifier generated using some rules that guarantee it is actually unique.

The previously mentioned messages are call-oriented and hold a conference identifier.

As voice communication over IP networks is becoming a key communication mode. The increasing voice IP traffic requires more and more performance at gatekeeper side.

The invention proposes a method of processing messages in a gatekeeper system, which tends to ameliorate the capacities of said gatekeeper system.

The invention also proposes a gatekeeper system with larger capacities, and a component able to ameliorate the capacities of a gatekeeper system.

Another aim of the invention is to propose a processing method and a gatekeeper system, and a component for a gatekeeper system, which allow easy extensive software or hardware modifications in a gatekeeper.

A method for processing messages incoming on a gatekeeper system of an Internet Protocol network, the system including a plurality of sub processes operable for processing such messages, the method comprising:
dispatching the messages incoming on the gatekeeper system onto those different sub-processes, characterised in that the dispatching step includes identifying whether a message belongs to a same call as a previous message, and, in that case, sending this message to the same sub-process as said previous message.

A gatekeeper system of an Internet Protocol network, the system hosting a plurality of sub-processes each able to process a series of messages, the gatekeeper system being arranged to dispatch the messages onto those different sub-processes, characterised in that the gatekeeper system is arranged to identify whether a message belongs to a same call as a previous message, and, in that case, is arranged to send this message to the sub-process that processed said previous message.

A component for a gatekeeper system of an Internet Protocol Network, comprising means for dispatching messages incoming on that component onto a plurality of sub-processes, characterised in that the component is arranged to identify whether a message belongs to a same call as a previous message, and, in that case, being operable to send this message to the sub-process that processed said previous message.

Other features, aims and advantages of the invention will appear to those skilled in the art through the following description of preferred embodiments of the invention, and through the appended figures, among which :
- figure 1 illustrates a simple IP signalling network, according to the state of the art;
- figure 2 is a diagram which illustrates exchanges of messages between a caller, a callee and a gatekeeper during a call set-up, according to the state of the art ;

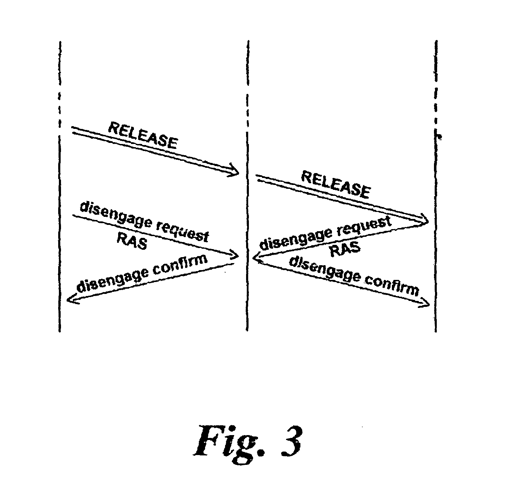

- figure 3 is a diagram which illustrates exchanges of messages between a caller, a callee and a gatekeeper during a call disengagement, according to the state of the art ;
- figure 4 represents a gatekeeper system according to the invention.

Call set-up in H323 is ruled by two protocols, which are respectively the Registration, Admission and status (RAS) protocol, and the Q931 protocol.

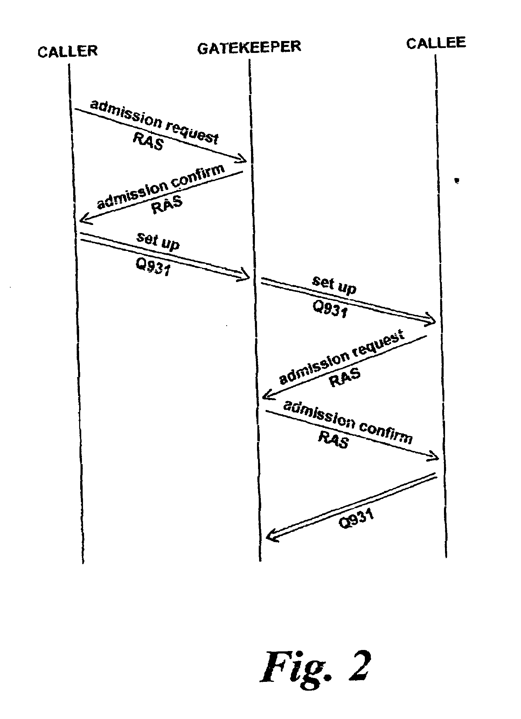

Figure 2 illustrates schematically the traditional RAS and Q931 messages sent between a caller, a gatekeeper and a callee during a call set-up.

On this figure, each arrow represents a message. It is indicated on each arrow whether the message is a RAS or a Q931 message.

In addition to the previously mentioned messages, a RAS message can also be a registration message, which appears when an IP end-point is first connected to the network, i.e. when the existence of a new end-point is declared to the gatekeeper.

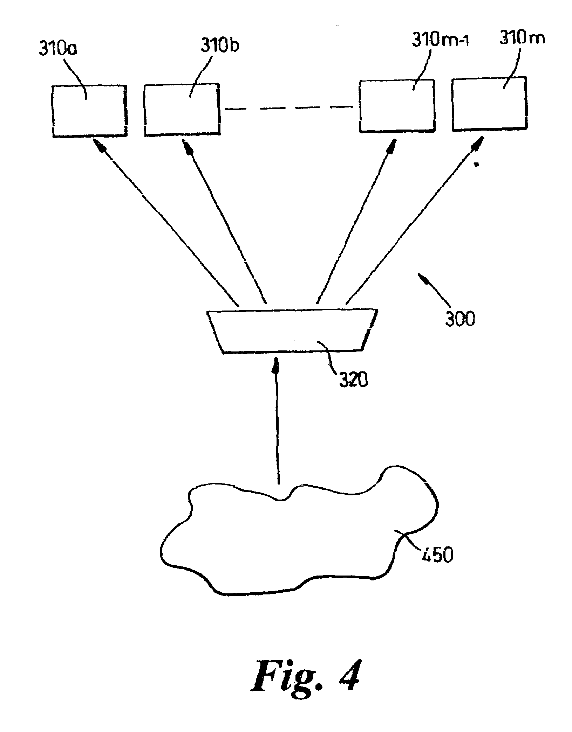

As illustrated on figure 4, the present gatekeeper system 300 includes a series of gatekeeper instances 310a, 310b, ..., 310n, which are each able to process different incoming messages.

Those instances 310a, 310b, ..., 310n are different sub-processes here carried out on different processors. In another realisation mode, the instances can be hosted by the same processor, or by a number of processors which is different from the number of sub-processes.

Those instances may also belong to a single computer or to a farm of computers.

Such a gatekeeper 300 has a scalable architecture. It allows to add new instances if the load on the gatekeeper 300 becomes too heavy.

The gatekeeper is seen as a single gatekeeper from the rest of the network, referenced 450 on figure 4, and from other signalling services, for example from signaling services developped by users of a platform called "Open Call Multiservice Controller platform", produced by HEWLETT PACKARD.

The present gatekeeper 300 includes a module 320, hereinafter called demux, which dispatches incoming messages to the set of gatekeeper instances 310a, 310b, ..., 310n.

This demux module 320 is here a specific hardware unit with its own specific software. More generally, the demux 320 can be a pure software element.

Demux 320 first determines whether a message is a registration or an admission.

If the message is a registration, demux 320 sends it to any gatekeeper instance 310a, 310b, ..., 310n according to a load balancing policy. This load balancing policy can be any load balancing policy used in other computer systems.

The load balancing policy can be completely unrelated to the rest of the dispatching algorithm. The load balancing policy is simply an enabler for load balancing for registrations and new calls.

If the message is the first one of a call, i.e. a RAS initial admission, the demux also sends it to any gatekeeper instance 310a, 310b, ..., 310n according to the load balancing policy.

A RAS message includes not only a conference identifier (conference ID), which is an information uniquely specific to a call.

The receiving instance 310a, 310b, ..., 310n is then responsible to identify itself as the gatekeeper instance to hold Q931 traffic.

If the incoming message belongs to a call for which at least one admission message has already been received by the demux 320, the demux then sends the message to the gatekeeper instance that had received this previous message.

In other words, an instance which has received a first admission message of a call then owns the call. It receives all the subsequent RAS messages of this call.

That means that the Q931 address of the allocated gatekeeper instance 310a, 310b, ..., 310n is given to the terminal that has sent the admission message so that this gatekeeper instance 310a, 310b, ..., 310n becomes the gatekeeper in the eyes of the terminal which has sent the message, and also in the eyes of the other terminals concerned by the call.

H323 standard does make provision for a gatekeeper to give at admission-on-stage its Q931 address (or even possibly the Q931 address of the callee end-point if Q931 is direct).

In the same manner as a traditional gatekeeper in a routed mode, this allocated instance is responsible for holding the Q931 traffic of the call. In other words, this instance plays the role of a usual gatekeeper after it has identified itself as such.

Dedicating the instances 310a, 310b, ..., 310n to their own calls provides a better global efficiency.

When receiving a new message of a known call, the allocated instance doesn't have to search anew the background data (call context) concerning the call, as these background data have already been acceded to previously.

The conference ID is different from one call to another, even if two calls are made by the same caller.

As this method dispatches the messages on the basis of their conference ID, the messages are dispatched on a call basis.

This feature is very advantageous in the case of messages coming from a signalling gateway.

A signalling gateway is the component that makes the interface between a H323 network and a Public Switched Telephone Network (PSTN). A gateway is an H323 end-point and hides a very large number of PSTN calls to the H323 network.

In the case of messages which transit through a gateway, these messages are usually seen by a gatekeeper as coming from the same IP end-point, i.e. the gateway.

The gatekeeper usually doesn't see the phones from which the messages come.

Furthermore, even if a dispatching was based on an end-point analysis (or registration analysis) would send all the messages coming from that gateway onto the same instance, which means that the instance would be rapidly overwhelmed.

The present dispatching being carried out on a call basis, more precisely here on a discrimination based on a conference ID value, the different messages coming from a same gateway are dispatched taking account of the actual calls messages belong to. The actual H323 workload being due to call processing, the present dispatching is very efficient.

RAS messages are specified by ASN.1 standard and are encoded according to a model named PER (Packed Encoding Rules).

ASN.1 standard specifies how to describe in a non ambiguous manner some data structures. ASN1 structures are usually tree structures.

Actually ASN.1 allows to describe any kind of data structure. A data structure may contain scalar types (integer,...) bound or unbound arrays, alternatives, some other data structure. Fields within a data structure may be optional.

The H323 message set (defined in H225 recomendation) is very complex. It holds more than 60 thousands of leaves. For instance the whole definition of an admission message requires several pages.

Furthermore, the RAS message are notably created under ASN 1 standard, but are also encoded under the PER model.

PER encoding reduces the size of the message to a minimum number of bits. In particular it reduces the size of some fields to their effective length.

For example, a number on several bytes may be reduced to 1 byte according to its value. Furthemore, expressions are not byte aligned. If an expression can be encoded on a number of bits (eg. An integer lower than 32 will be encoded on 5 bits), next expression will not start on a byte boundary but at the 6^{th} bits of the current byte.

The final PER encoded message is known as very hard to understand in particular, as it is a sequence of fields of bits which have different sizes, each field being in turn a sequence of other fields, and so on.

In the end, RAS messages usually require very heavy software tools to be decoded. Those heavy tools are generic. This especially applies to complex message sets where writing the codes at hand would be hazardous. They decode the PER message entirely, which takes a long time.

This decoding is usually realised in usual gatekeepers.

It is proposed herein after a lightweight decoding method which is carried out at the level of the demux 320 in order to read only the data which are necessary for the dispatching, i.e. the message type and the conference ID.

This partial decoding relies on the fact that the ASN.1 structures have a tree structure and on the fact that the interesting informations are not far from the first root fields of this tree structure.

The indication of the message type being in one of the very first fields, the partial decoding process first reads the message type field. Then, depending on the message type, the process deduces where the conference ID field should be if any.

Departing from the indication of the message type, the demux deduces some features of the conference ID field.

For example, the demux deduces that the conference ID field is after three fields which each represent character chains.

To skip the fields before the conference ID, the demux here needs to know all the fields that may preceed the conference ID in the ASN.1 data structure.

The partial decoding method examinates the fields appearing consequently in the tree structure and jumps the fields that appear to be other than that searched. In the PER decoding the size of each field is either known a-priori, for fixed encoded-lenght fields, or, is indicated in the message for variable encoded-lenght fields. That's why it is possible for the partial decoding method to jump a field without having to read it.

The present lightweight-decoding algorithm runs here in two steps. The first step consists in extracting the type of the RAS message. In a second step, if according to its type the message does belong to a call, then conference identifier is extracted.

Getting the type only deals with the heading bits of the message. The head of RAS messages looks like:
- bit n° 0 : extension bit
- bit n° 1 to bit n° 5 : message type
- bit n° 6 and after: payload

Message type is an integer value read from bits n°1 to n° 5 of the message.

The location of the conference identifier (CID) fields depends on the message type and the actual contents of the message. Knowing the type of the message from the previous step, all message fields before CID are skipped.

If a field is a scalar value, its length is known according to the PER standard: it is either a fixed length or it is read from the message. If a field is a data structure we skip in turn each field within this structure, and so on.

For instance let's consider an admission message (Admission Request or ARQ). The message payload has the following structure:

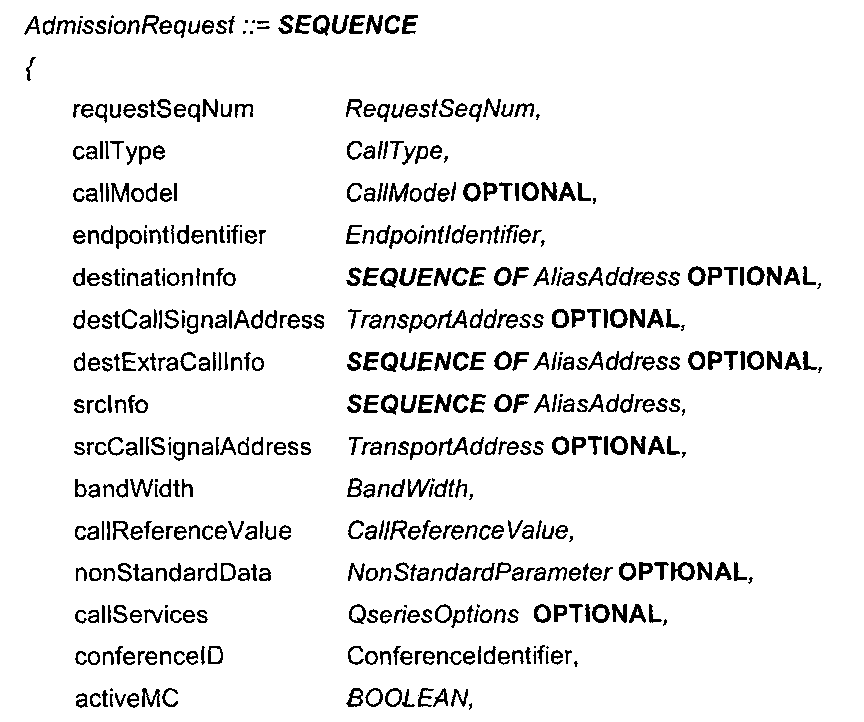

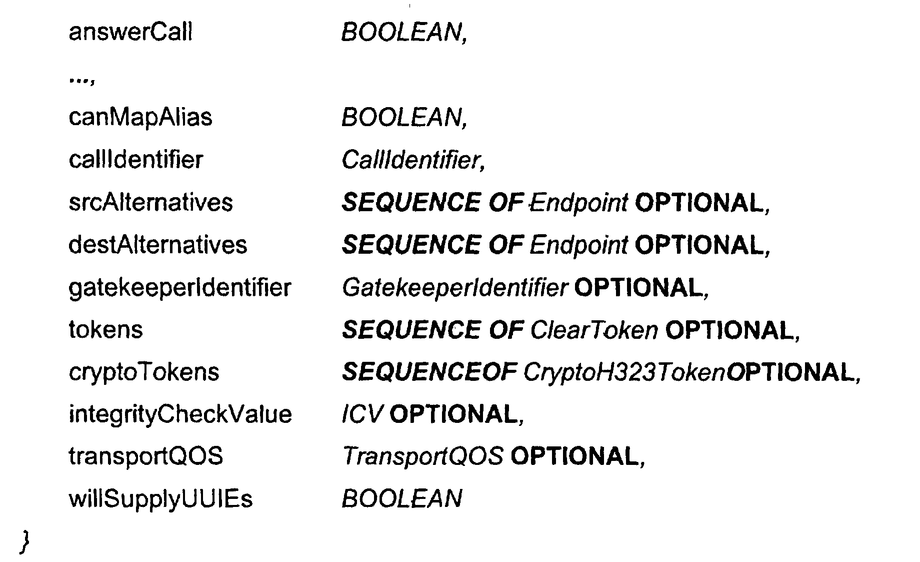

An Admission Request (ARQ) message holds some possible extensions (it includes a "..." marker) and some optional fields.

Since message extensions are located after the conference ID, we can skip the heading extension bit in the PER representation. Since the message has some optional fields located before the CID, we must save the next 7 bits making an option presence mask.

The *requestSeqNum* field is a 16bits integer. According to PER standard, it occupies 16 bits and is byte aligned. We can skip this field.

The *callType* field is actually an extensible enumeration defined as:

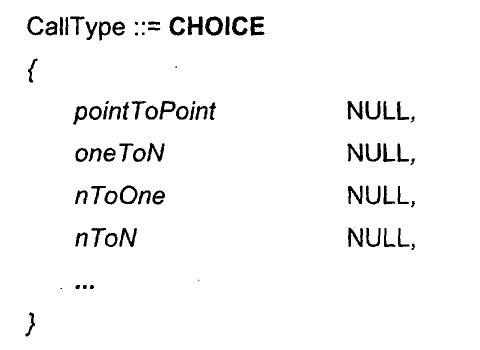

Depending on its extension bit, the value of call type attribute either belongs to four known ones, or is in the extension.

In the former case we skip the extension bit and the 2 bits standing for the value of the attribute. For the latter case we skip the extension bit and the actual extension according to the representation defined in PER standard for choice extensions.

The *callModel* field is optional. We check in the option bit-mask saved at the beginning of message processing if it is present. If so, we skip it according to its PER representation.

We skip in turn each field and possibly sub-fields of the message until we reach the CID. We can then read the CID of the ARQ.

The present decoding method can scan several branches of the tree structure before arriving on the searched field.

However, we are interested in a few fields at the first levels of the hierarchy. So the value can be accessed very quickly by watching only the highest level fields.

The present system includes a table that matches a gatekeeper instance to a conference ID for all known calls.

As concerns Registration messages or first admission messages of a call, the load balancing policy used to dispatch those messages can be completely unrelated to the rest of the dispatching algorithm, it can also rely on a table which makes a correspondance between H323 call identifier and Gatekeeper instance, on tupples or on a hashing function over the H323 call identifier.

Registration and admission are the most typical messages.

But the method applies to any RAS message the gatekeeper may receive. If a message is not call-related, it will be processed according to the registration message model. If message belongs to a call, it will be processed according to the admission message model.

As concerns RAS messages, such as RAS gatekeeper discovery or location requests, they are sent to a dedicated gatekeeper instance called a "GK root".

The present method is compatible with all H323 end-points, and all types of terminals.

The terminals which exchange when the call is established can be for example IP phones, usual telephones, for example through a gateway, visioconference terminals or Personal Computers.

It should be understood that the IP network can be any IP network, local or not, such as the internet or an intranet network.

## Claims

1. A method for processing messages incoming on a gatekeeper system (300) of an Internet Protocol network (400), the system including a plurality of sub processes (310a, 310b, ..., 310n) operable for processing such messages, the method comprising:
dispatching (320) the messages incoming on the gatekeeper system (300) onto those different sub-processes (310a, 310b, ..., 310n), **characterised in that** the dispatching step includes identifying whether a message belongs to a same call as a previous message, and, **in that** case, sending this message to the same sub-process (310a, 310b, ..., 310n) as said previous message.

2. The method of claim 1, **characterised in that** the step of identifying whether a message belongs to a same call as a previous message includes the step of identifying whether the message has same conference identifier as said previous message.

3. The method of claim 1 or 2, **characterised in that** it is applied in a H323 network (400).

4. The method of claim 3, **characterised in that** the messages to be dispatched are Registration and Admission Service messages.

5. The method of anyone of claims 1 to 4, **characterised in that** the dispatching step includes identifying whether the message is a registration or an admission message, and, if the message is a registration message, determining the sub-process (310a, 310b, ..., 310n) to which the message is going to be dispatched on the basis of the current load of the different sub-processes (310a, 310b, ..., 310n) in order to balance the load of the different sub-processes (310a, 310b, ..., 310n).

6. The method according to one of the previous claims, **characterised in that** the dispatching step (320) includes identifying whether the message is a registration or an admission message, and, if the message is an admission message, determining whether the message is the first admission message of a call, and, **in that** case, determining the sub-process (310a, 310b, ..., 310n) to which the message is going to be dispatched on the basis of the current load of the different sub-processes (310a, 310b, ..., 310n) in order to balance the load of the different sub-processes (310a, 310b, ..., 310n).

7. The method according to one of the previous claims, **characterised in that** the messages to be dispatched enter the gatekeeper system (300) in an encoded form and comprise several fields, one or several of these fields containing data which identify a call and **in that** the dispatching step (320) includes decoding the message only partially, the decoded part including said one or several fields which contain those data.

8. The method according to claim 7, **characterised in that** it includes the step of examining fields of the message in sequence until finding said one or several fields which contain the data which identify the call.

9. The method of claim 7 or claim 8, **characterised in that** it includes the further step of reading one or several fields of the message which indicate the type of the message and deducing, on the basis of the type of the message, a sequence of field types concerning the fields which are placed before said one or several fields that contain the call identifying data.

10. The method of claim 9, **characterised in that** it includes the further step of examining a field which indicates whether some optional fields are present or not before said one or several fields which contain the call identifying data, in order to determine whether such optional fields should be found or not when examining the fields in sequence.

11. A Gatekeeper system (300) of an Internet Protocol network (400), the system hosting a plurality of sub-processes (310a, 310b, ..., 310n) each able to process a series of messages, the gatekeeper system (300) being arranged to dispatch the messages onto those different sub-processes (310a, 310b, ..., 310n), **characterised in that** the gatekeeper system (300) is arranged to identify whether a message belongs to a same call as a previous message, and, **in that** case, is arranged to send this message to the sub-process (310a, 310b, ..., 310n) that processed said previous message. identifier as a previous message, and, **in that** case, to send this message to the sub-process (310a, 310b, ..., 310n) that processed said previous message.

12. The gatekeeper system (300) of claim 11, **characterised in that** it includes means to identify whether a message has same conference.

13. A component (320) for a gatekeeper system (300) of an Internet Protocol Network (400), comprising means for dispatching messages incoming on that component (320) onto a plurality of sub-processes (310a, 310b, ..., 310n), **characterised in that** the component (320) is arranged to identify whether a message belongs to a same call as a previous message, and, **in that** case, being operable to send this message to the sub-process (310a, 310b, ..., 310n) that processed said previous message.

14. The component (320) of claim 13, **characterised in that** it includes means to identify whether a message has same conference identifier as a previous message and, **in that** case, to send this message to the sub-process (310a, 310b, ..., 310n) that processed said previous message.

## Patentansprüche

1. Ein Verfahren zum Verarbeiten von Nachrichten, die an einem Torwächtersystem (300) eines Internetprotokoll-Netzwerks (400) eingehen, wobei das System eine Mehrzahl von Teilprozessen (310a, 310b, ..., 310n) umfasst, die zum Verarbeiten derartiger Nachrichten betreibbar sind, wobei das Verfahren folgende Schritte aufweist:
Abgeben (320) der Nachrichten, die an dem Torwächtersystem (300) eingehen, zu diesen unterschiedlichen Teilprozessen (310a, 310b, ..., 310n), **dadurch gekennzeichnet, dass** der Abgebeschritt ein Identifizieren, ob eine Nachricht zu einem gleichen Anruf wie eine vorhergehende Nachricht gehört, und in diesem Fall ein Senden dieser Nachricht zu dem gleichen Teilprozess (310a, 310b, ..., 310n) wie die vorhergehende Nachricht umfasst.

2. Das Verfahren gemäß Anspruch 1, **dadurch gekennzeichnet, dass** der Schritt des Identifizierens, ob eine Nachricht zu einem gleichen Anruf wie eine vorhergehende Nachricht gehört, den Schritt eines Identifizierens umfasst, ob die Nachricht einen gleichen Konferenzidentifizierer wie die vorhergehende Nachricht aufweist.

3. Das Verfahren gemäß Anspruch 1 oder 2, **dadurch gekennzeichnet, dass** dasselbe bei einem H323-Netzwerk (400) angewendet wird.

4. Das Verfahren gemäß Anspruch 3, **dadurch gekennzeichnet, dass** die Nachrichten, die abgeben werden sollen, Registrierungs- und Zugangsdienst-Nachrichten sind.

5. Das Verfahren gemäß einem der Ansprüche 1 bis 4, **dadurch gekennzeichnet, dass** der Abgebeschritt ein Identifizieren, ob die Nachricht eine Registrierungs- oder eine Zugangsnachricht ist, und, falls die Nachricht eine Registrierungsnachricht ist, ein Bestimmen des Teilprozesses (310a, 310b, ..., 310n), zu dem die Nachricht abgegeben wird, auf der Basis der aktuellen Belastung der unterschiedlichen Teilprozesse (310a, 310b, ..., 310n) umfasst, um die Belastung der unterschiedlichen Teilprozesse (310a, 310b, ..., 310n) auszugleichen.

6. Das Verfahren gemäß einem der vorhergehenden Ansprüche, **dadurch gekennzeichnet, dass** der Abgebeschritt (320) ein Identifizieren, ob die Nachricht eine Registrierungs- oder eine Zugangsnachricht ist, und, falls die Nachricht eine Zugangsnachricht ist, ein Bestimmen, ob die Nachricht die erste Zugangsnachricht eines Anrufs ist, und in diesem Fall ein Bestimmen des Teilprozesses (310a, 310b, ..., 310n), zu dem die Nachricht abgegeben wird, auf der Basis der aktuellen Belastung der unterschiedlichen Teilprozesse (310a, 310b, ..., 310n) umfasst, um die Belastung der unterschiedlichen Teilprozesse (310a, 310b, ..., 310n) auszugleichen.

7. Das Verfahren gemäß einem der vorhergehenden Ansprüche, **dadurch gekennzeichnet, dass** die Nachrichten, die abgegeben werden sollen, in das Torwächtersystem (300) in einer codierten Form eintreten und mehrere Felder aufweisen, wobei eines oder mehrere dieser Felder Daten enthalten, die einen Anruf identifizieren, und **dadurch**, dass der Abgebeschritt (320) ein lediglich teilweises Decodieren der Nachricht umfasst, wobei der decodierte Teil das eine oder die mehreren Felder umfasst, die diese Daten enthalten.

8. Das Verfahren gemäß Anspruch 7, **dadurch gekennzeichnet, dass** dasselbe den Schritt eines Untersuchens von Feldern der Nachricht der Reihe nach umfasst, bis das eine oder die mehreren Felder gefunden werden, die die Daten enthalten, die den Anruf identifizieren.

9. Das Verfahren gemäß Anspruch 7 oder Anspruch 8, **dadurch gekennzeichnet, dass** dasselbe den weiteren Schritt eines Lesens eines oder mehrerer Felder der Nachricht, die den Typ der Nachricht angeben, und eines Herleitens einer Sequenz von Feldtypen, die die Felder betreffen, die vor dem einem oder den mehreren Feldern platziert sind, die die Anrufidentifizierungsdaten enthalten, auf der Basis des Typs der Nachricht umfasst.

10. Das Verfahren gemäß Anspruch 9, **dadurch gekennzeichnet, dass** dasselbe den weiteren Schritt eines Untersuchens eines Felds umfasst, das angibt, ob einige optionale Felder vor dem einem oder den mehreren Feldern, die die Anrufidentifizierungsdaten enthalten, vorhanden sind oder nicht, um zu bestimmen, ob derartige optionale Felder bei einem Untersuchen der Felder der Reihe nach gefunden werden sollten oder nicht.

11. Ein Torwächtersystem (300) eines Internetprotokoll-Netzwerks (400), wobei das System eine Mehrzahl von Teilprozessen (310a, 310b, ..., 310n) beherbergt, die jeweils in der Lage sind, eine Reihe von Nachrichten zu verarbeiten, wobei das Torwächtersystem (300) angeordnet ist, um die Nachrichten zu diesen unterschiedlichen Teilprozessen (310a, 310b, ..., 310n) abzugeben, **dadurch gekennzeichnet, dass** das Torwächtersystem (300) angeordnet ist, um zu identifizieren, ob eine Nachricht zu einem gleichen Anruf wie eine vorhergehende Nachricht gehört, und in diesem Fall angeordnet ist, um diese Nachricht zu dem Teilprozess (310a, 310b, ..., 310n) zu senden, der die vorhergehende Nachricht verarbeitet hat.

12. Das Torwächtersystem (300) gemäß Anspruch 11, **dadurch gekennzeichnet, dass** dasselbe eine Einrichtung umfasst, um zu identifizieren, ob eine Nachricht einen gleichen Konferenzidentifizierer wie eine vorhergehende Nachricht aufweist, und in diesem Fall diese Nachricht zu dem Teilprozess (310a, 310b, ..., 310n) zu senden, der die vorhergehende Nachricht verarbeitet hat.

13. Eine Komponente (320) für ein Torwächtersystem (300) eines Internetprotokoll-Netzwerks (400), die eine Einrichtung zum Abgeben von Nachrichten, die an dieser Komponente (320) eingehen, zu einer Mehrzahl von Teilprozessen (310a, 310b, ..., 310n) aufweist, **dadurch gekennzeichnet, dass** die Komponente (320) angeordnet ist, um zu identifizieren, ob eine Nachricht zu einem gleichen Anruf wie eine vorhergehende Nachricht gehört, und in diesem Fall betreibbar ist, um diese Nachricht zu dem Teilprozess (310a, 310b, ..., 310n) zu senden, der die vorhergehende Nachricht verarbeitet hat.

14. Die Komponente (320) gemäß Anspruch 13, **dadurch gekennzeichnet, dass** dieselbe eine Einrichtung umfasst, um zu identifizieren, ob eine Nachricht einen gleichen Konferenzidentifizierer wie eine vorhergehende Nachricht aufweist, und in diesem Fall diese Nachricht zu dem Teilprozess (310a, 310b, ..., 310n) zu senden, der die vorhergehende Nachricht verarbeitet hat.

## Revendications

1. Procédé pour traiter des messages arrivant sur un système de contrôle d'accès (300) d'un réseau IP (400), le système comportant une pluralité de processus secondaires (310a, 310b, ..., 310n) pouvant être activés pour traiter de tels messages, le procédé comprenant :
l'expédition (320) des messages arrivant sur le système de contrôle d'accès (300) sur ces différents processus secondaires (310a, 310b, ..., 310n), **caractérisé en ce que** l'étape d'expédition comporte l'identification du fait qu'un message appartient à un même appel qu'un message précédent et dans ce cas, l'envoi de ce message au même processus secondaire (310a, 310b, ..., 310n) que ledit message précédent.

2. Procédé selon la revendication 1, **caractérisé en ce que** l'étape d'identification du fait qu'un message appartient à un même appel qu'un message précédent comporte l'étape consistant à identifier si le message a le même identifiant de conférence que ledit message précédent.

3. Procédé selon la revendication 1 ou 2, **caractérisé en ce qu'**il est appliqué dans un réseau H323 (400).

4. Procédé selon la revendication 3, **caractérisé en ce que** les messages à distribuer sont des messages de service d'enregistrement et d'admission.

5. Procédé selon l'une quelconque des revendications 1 à 4, **caractérisé en ce que** l'étape d'expédition comporte l'identification du fait que le message est un message d'enregistrement ou d'admission et, si le message est un message d'enregistrement, la détermination du processus secondaire (310a, 310b, ..., 310n) auquel le message va être distribué, en se basant sur la charge courante des différents processus secondaires (310a, 310b, ..., 310n) pour équilibrer la charge des différents processus secondaires (310a, 310b, ..., 310n).

6. Procédé selon l'une quelconque des revendications précédentes, **caractérisé en ce que** l'étape d'expédition (320) comporte l'identification du fait que le message est un message d'enregistrement ou d'admission et, si le message est un message d'admission, la détermination du fait que le message est le premier message d'admission d'un appel et dans ce cas, la détermination du processus secondaire (310a, 310b, ..., 310n) auquel le message va être distribué en se basant sur la charge courante des différents processus secondaires (310a, 310b, ..., 310n) pour équilibrer la charge des différents processus secondaires (310a, 310b, ..., 310n).

7. Procédé selon l'une quelconque des revendications précédentes, **caractérisé en ce que** les messages à distribuer entrent dans le système de contrôle d'accès (300) sous une forme codée et comprennent plusieurs champs, un ou plusieurs de ces champs contenant des données qui identifient un appel et **en ce que** l'étape d'expédition (320) comporte le décodage du message seulement partiellement, la partie décodée comportant lesdits un ou plusieurs champs qui contiennent ces données.

8. Procédé selon la revendication 7, **caractérisé en ce qu'**il comporte l'étape consistant à examiner les champs du message en séquence jusqu'à trouver lesdits un ou plusieurs champs qui contiennent les données qui identifient l'appel.

9. Procédé selon la revendication 7 ou la revendication 8, **caractérisé en ce qu'**il comporte l'étape supplémentaire consistant à lire un ou plusieurs champs du message qui indiquent le type du message et en déduire, en se basant sur le type du message, une séquence de types de champs concernant les champs qui sont placés avant lesdits un ou plusieurs champs qui contiennent les données d'identification d'appel.

10. Procédé selon la revendication 9, **caractérisé en ce qu'**il comporte l'étape supplémentaire consistant à examiner un champ qui indique si certains champs optionnels sont présents ou non avant lesdits un ou plusieurs champs qui contiennent les données identifiant l'appel, pour déterminer si ces champs optionnels doivent être recherchés ou non en examinant les champs en séquence.

11. Système de contrôle d'accès (300) d'un réseau IP (400), le système recevant une pluralité de processus secondaires (310a, 310b, ..., 310n) capables chacun de traiter une série de messages, le système de contrôle d'accès (300) étant agencé pour afficher les messages sur ces différents processus secondaires (310a, 310b, ..., 310n), **caractérisé en ce que** le système de contrôle d'accès (300) est agencé pour identifier si un message appartient à un même appel qu'un message précédent et dans ce cas, est agencé pour envoyer ce message au processus secondaire (310a, 310b, ..., 310n) qui a traité ledit message précédent.

12. Système de contrôle d'accès (300) selon la revendication 11, **caractérisé en ce qu'**il comporte des moyens pour identifier si un message possède le même identifiant de conférence qu'un message précédent et dans ce cas, pour envoyer ce message au processus secondaire (310a, 310b, ..., 310n) qui a traité ledit message précédent.

13. Composant (320) pour un système de contrôle d'accès (300) d'un réseau IP (400), comprenant des moyens pour distribuer des messages arrivant sur ce composant (320) sur une pluralité de processus secondaires (310a, 310b, ..., 310n), **caractérisé en ce que** le composant (320) est agencé pour identifier si un message appartient à un même appel qu'un message précédent et dans ce cas, pouvant être actionné pour envoyer ce message au processus secondaire (310a, 310b, ..., 310n) qui a traité ledit message précédent.

14. Composant (320) selon la revendication 13, **caractérisé en ce qu'**il comporte des moyens pour identifier si un message possède le même identifiant de conférence qu'un message précédent et dans ce cas, pour envoyer ce message au processus secondaire (310a, 310b, ..., 310n) qui a traité ledit message précédent.
